Europäisches Patentamt

European Patent Office

Office européen des brevets

(19)

(11) EP 1 375 883 A2

(12) **EUROPÄISCHE PATENTANMELDUNG**

(43) Veröffentlichungstag:
02.01.2004 Patentblatt 2004/01

(51) Int Cl.⁷: **F02D 41/22**, F02D 41/18

(21) Anmeldenummer: 03005774.9

(22) Anmeldetag: **14.03.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK**<br><br>(30) Priorität: **18.06.2002  DE 10227063** | (71) Anmelder: **ROBERT BOSCH GMBH**<br>**70442 Stuttgart (DE)**<br><br>(72) Erfinder: **Wild, Ernst**<br>**71739 Oberriexingen (DE)** |

(54) **Verfahren zum Betreiben einer Brennkraftmaschine, Verfahren zur Überprüfung eines Verfahrens zum Betreiben einer Brennkraftmaschine, Brennkraftmaschine und Steuerelement**

(57)   Die vorliegende Erfindung betrifft ein Verfahren zum Betreiben einer Brennkraftmaschine, ein Prüfungsverfahren zur Überprüfung der Funktion eines Verfahrens zum Betreiben einer Brennkraftmaschine, ein Steuerelement für eine Brennkraftmaschine sowie eine Brennkraftmaschine.

Bei einem Verfahren zum Betreiben einer Brennkraftmaschine, insbesondere einer Brennkraftmaschine für ein Kraftfahrzeug wird einem Brennraum Luft zugeführt. Diese Luft strömt dabei zunächst durch ein Ansaugrohr in dem eine Drosselklappe angeordnet ist. Bevor die Luft in den Brennraum gelangt, strömt sie auch über wenigstens ein Einlassventil mit variabler Ventilhubverstellung. Sowohl für die Einstellung des Drosselklappenwinkels als auch die Einstellung des Ventilhubs ist jeweils eine Stelleinrichtung vorgesehen. Die beiden Stelleinrichtungen sind unabhängig voneinander. Im Normalbetrieb werden sie derart angesteuert, dass sowohl ein vorgegebener Saugrohrdruck als auch eine vorgegebene Füllung des Brennraums erzeugt wird. Bei Ausfall einer der Stelleinrichtungen wird dann lediglich ein Sollwert für die Zylinderfüllung vorgegeben und mittels der noch funktionierenden Stelleinrichtung erzeugt.

Fig. 3

**Beschreibung**

Die vorliegende Erfindung betrifft ein Verfahren zum Betreiben einer Brennkraftmaschine, ein Prüfungsverfahren zur Überprüfung der Funktion eines Verfahrens zum Betreiben einer Brennkraftmaschine, ein Steuerelement für eine Brennkraftmaschine sowie eine Brennkraftmaschine.

Brennkraftmaschinen, insbesondere Brennkraftmaschinen für Kraftfahrzeuge, weisen ein Saugrohr zur Ansaugung von Verbrennungsluft auf. Im Saugrohr ist eine Drosselklappe zur Steuerung der Luftströmung im Ansaugrohr angeordnet. Bei Fahrzeugen, die zusätzlich eine variable Ventilhubsteuerung aufweisen, sorgt die Drosselklappe dafür, dass eine Androsselung des Saugrohrdruckes vorgenommen werden kann, damit z. B. eine Tankentlüftung gewährleistet ist. Die variable Ventilhubsteuerung stellt die gewünschte Füllung im Brennraum ein.

Ein Problem kann sich dabei dann ergeben, wenn eine der beiden Stelleinrichtungen defekt ist und somit nicht mehr sichergestellt ist, dass die Zylinderfüllung der Sollwertvorgabe entspricht. Aufgrund von Abweichungen des Istwertes der Befüllung von dem Sollwert können sich Abweichungen des tatsächlich zur Verfügung stehenden Motormomentes von dem Fahrerwunsch ergeben. Dies ist insbesondere dann möglich, wenn die Einspritzmenge aufgrund des tatsächlichen, gemessenen Luftmassenstromes bestimmt wird.

Aufgabe der Erfindung ist es, die Stelleinrichtungen für Ventilhubsteuerung und Drosselklappe so anzusteuern, dass im fehlerfreien Normalbetrieb sowohl ein vorgegebener Saugrohrdruck als auch eine vorgegebene Luftfüllung im Brennraum zuverlässig eingestellt wird. Darüber hinaus soll bei Ausfall einer Stelleinrichtung mit dem noch intakten Steller die vorgegebene Sollfüllung des Brennraumes zuverlässig eingestellt werden.

Dies wird durch ein Verfahren zum Betreiben einer Brennkraftmaschine gemäß dem Anspruch 1 erreicht.

Bei einem solchen Verfahren zum Betreiben einer Brennkraftmaschine, insbesondere einer Brennkraftmaschine für ein Kraftfahrzeug, wird einem Brennraum Luft zugeführt. Diese Luft strömt dabei zunächst durch ein Ansaugrohr in dem eine Drosselklappe angeordnet ist. Bevor die Luft in den Brennraum gelangt, strömt sie auch über wenigstens ein Einlassventil mit variabler Ventilhubverstellung. Sowohl für die Einstellung des Drosselklappenwinkels als auch die Einstellung des Ventilhubs ist jeweils eine Stelleinrichtung vorgesehen. Die beiden Stelleinrichtungen sind unabhängig voneinander. Im Normalbetrieb werden sie derart angesteuert, dass sowohl ein vorgegebener Saugrohrdruck als auch eine vorgegebene Füllung des Brennraums erzeugt wird. Bei Ausfall einer der Stelleinrichtungen wird dann lediglich ein Sollwert für die Zylinderfüllung vorgegeben und mittels der noch funktionierenden Stelleinrichtung erzeugt.

Der Momentenwunsch des Fahrers, der im wesentlichen über die Stellung des Gaspedals vorgegeben und aus dem der Sollwert für die Zylinderfüllung abgeleitet wird, wird demgemäß im Normalbetrieb durch zwei Stelleinrichtungen eingestellt. Dabei kann in diesem Normalbetrieb zusätzlich ein für andere Funktionen günstiger Saugrohrdruck eingehalten werden. Ein Beispiel für eine solche andere Funktion ist die Entlüftung des Kraftstofftankes. Die Tankentlüftung ist deshalb wünschenswert, weil dadurch im Kraftstofftank entstehende Kraftstoffdämpfe in den Brennraum der Brennkraftmaschine gelangen und somit mitverbrannt werden. Die Füllungssteuerung mit zwei Stelleinrichtungen, die unabhängig voneinander arbeiten, ermöglicht dabei die zeitgleiche Ansteuerung beider Stelleinrichtungen ohne gegenseitige Verkopplung. Ein schnelles, schwingungsfreies Einlaufen der Steller und damit eine ebenso erfolgende schnelle schwingungsfreie Einstellung der Sollwerte in der Brennkraftmaschine wird erreicht.

Bei Ausfall einer der beiden Stelleinrichtungen, insbesondere bei einem Klemmen in der Offenstellung eines Stellers wird mittels des erfindungsgemäßen Verfahrens eine schnelle Reaktion des Systems erzielt. Die noch intakte Stelleinrichtung übernimmt die Steuerung des Luftmassenstromes, so dass die Füllungssteuerung und damit das Einregeln der Sollluftmenge im Brennraum der Brennkraftmaschine weiter gewährleistet ist. Der Momentenwunsch des Fahrers wird umgesetzt. Es wird insbesondere ein Überschreiten des Sollwertes der Zylinderfüllung vermieden.

In vorteilhafter Ausgestaltung der Erfindung ist es vorgesehen, dass die Sollwerte für den einzusteuernden Drosselklappenwinkel und den einzusteuernden Ventilhub aufgrund ermittelter Sollwerte für den Luftmassenstrom und die Zylinderfüllung ermittelt werden und von der Stelleinrichtung eingesteuert werden. Bei Ausfall eines der beiden Stelleinrichtungen kann dann anstelle des Sollwertes für den Luftmassenstrom der IstWert des Luftmassenstroms für die Ermittlung der Sollwerte für die Stelleinrichtung von Ventilhub und Drosselklappenwinkel herangezogen werden. Der Luftmassenstrom kann insbesondere mittels eines Luftmassensensors ermittelt werden, der im Saugrohr, vorzugsweise vor der Drosselklappe angeordnet ist.

Gemäß weiterer Ausgestaltung der Erfindung ist es auch möglich, dass die von den Stelleinrichtungen einzusteuernden Sollwerte für Drosselklappenwinkel und Ventilhub aufgrund von Sollwerten für den Saugrohrdruck und Sollwerten für die Zylinderfüllung ermittelt werden. Fällt eine der beiden Stelleinrichtungen aus, so kann anstelle des Sollwertes für den Saugrohrdruck der Istwert des Saugrohrdruckes bei der Ermittlung der Sollwerte für Drosselklappenwinkel und Ventilhub verwendet werden. Dabei ist als Saugrohrdruck der im Saugrohr in Strömungsrichtung der angesaugten Luft gesehen hinter der Drosselklappe anstehenden Druck zu verwenden. Dieser Druck kann beispielsweise über einen im entsprechenden Bereich angeordneten Drucksensor erfasst werden.

Ein weiterer Vorteil des erfindungsgemäßen Verfahrens ist auch, dass die Überprüfung der Funktion des Verfahrens leicht möglich ist. Bei einem Überprüfungsverfahren wird hierzu, wie im Fahrbetrieb durch die Betätigung des Fahrpedals zunächst ein zu erzeugendes Motormoment vorgegeben. Aufgrund dieses Motormomentes werden im Fahrzeug die Sollwerte für den Drosselklappensteller und den Ventilhub ermittelt. Es wird zur Überprüfung der Funktion des erfindungsgemäßen Verfahrens der Stellantrieb einer der beiden Stelleinrichtungen unterbrochen. Es wird dann überprüft, ob gemäß dem Verfahren zum Betreiben der Brennkraftmaschine durch entsprechende Stellbewegungen der noch funktionierenden Stelleinrichtung das vorgegebene Motormoment eingesteuert und eingehalten wird. Im Sinne einer vollständigen Überprüfung der Funktion des Verfahrens gemäß der Erfindung ist es darüber hinaus auch noch möglich, nach Überprüfung des Verfahrens aufgrund einer Unterbrechung des einen Stellantriebes diesen wieder in Funktion zu nehmen und den anderen Stellantrieb zu unterbrechen und auch hier zu überprüfen, ob das vorgegebene Motormoment weiter eingehalten wird. Daneben kann auch überprüft werden, ob im Normalbetrieb ein Einschwingverhalten der Stelleinrichtungen in die Position, in der das vorgegebene Motormoment eingehalten wird, gegeben ist, obgleich das Signal wenigstens eines der beiden Sensoren Luftmassensensor und Saugrohrdrucksensor künstlich gestört ist.

Gemäß der Erfindung weist ein Steuerelement, insbesondere ein Read-Only-Memory, für ein Steuergerät einer Brennkraftmaschine insbesondere eines Kraftfahrzeugs ein darauf abgespeichertes Programm auf. Das Programm ist auf einem Rechengerät, insbesondere einem Mikroprozessor ablauffähig. Es ist zur Ausführung wenigstens eines Verfahrens zur Ansteuerung der Stellelemente gemäß der Erfindung und/ oder einem Prüfungsverfahren eines solchen Verfahrens geeignet.

Gemäß der Erfindung weist eine Brennkraftmaschine, insbesondere eine Brennkraftmaschine für ein Kraftfahrzeug ein Saugrohr auf, in dem eine Drosselklappe angeordnet ist. Für jeden Brennraum der Brennkraftmaschine ist wenigstens ein Einlassventil mit variabler Ventilhubsteuerung vorgesehen. Für das wenigstens eine Einlassventil jeden Brennraums und die Drosselklappe sind Stelleinrichtungen vorgesehen, die voneinander unabhängig sind. Über die Drosselklappe und Einlassventil wird dem Brennraum Luft zugeführt. Es ist ein Steuergerät vorgesehen, das in seinem Normalbetrieb Sollwerte für den Ventilhub der Einlassventile und die Drosselklappenstellung aufgrund von Sollwerten für die Zylinderfüllung und den Saugrohrdruck ermittelt und über die Stelleinrichtungen einstellt. Bei Auswahl einer der beiden Stelleinrichtungen werden die Sollwerte für Ventilhub und Drosselklappenstellung aufgrund eines Sollwertes der Zylinderfüllung von einem der beiden Ist-Werte aus Luftmassenstrom und Saugrohrdruck ermittelt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Darüber hinaus ist die Erfindung auch noch anhand eines in der Zeichnung dargestellten Ausführungsbeispiels näher erläutert. Dabei zeigt:

Fig. 1    ein schematisches Blockdiagramm zur Ermittlung der Sollwerte für den Drosselklappenwinkel und den Ventilhub des Einlassventils aufgrund von Sollwerten für die Zylinderfüllung und Saugrohrdruck;

Fig. 2    ein schematisches Blockdiagramm für die Durchführung eines erfindungsgemäßen Verfahrens zum Betreiben einer Brennkraftmaschine mit unabhängigen Stelleinrichtungen für die Einstellung des Drosselklappenwinkels und des Ventilhubs; und

Fig. 3    eine schematische Darstellung einer erfindungsgemäßen Brennkraftmaschine mit einer Steuereinrichtung zur Durchführung eines erfindungsgemäßen Verfahrens zum Betreiben einer Brennkraftmaschine sowie eines erfindungsgemäßen Prüfungsverfahrens.

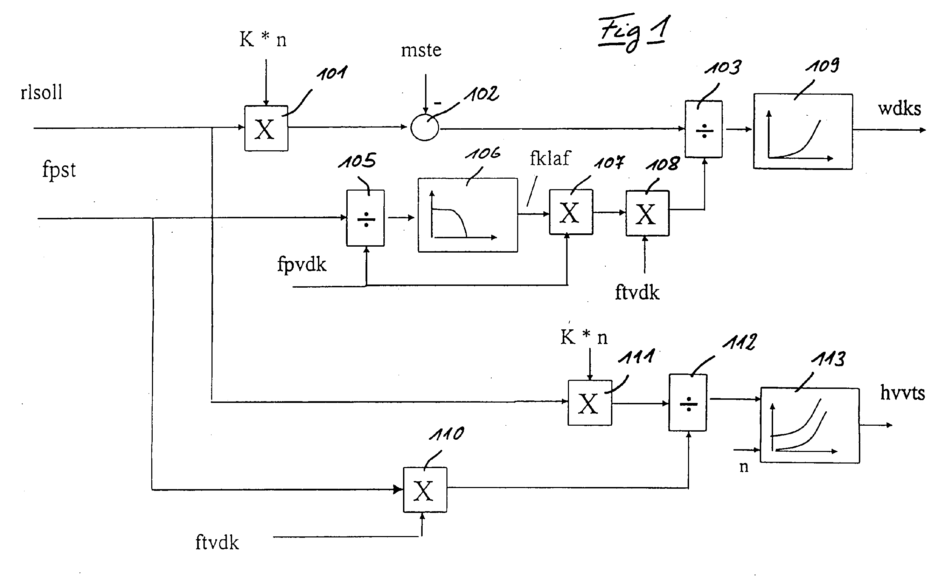

Die Fig. 1 zeigt in schematischer Darstellung das Blockdiagramm einer Füllungssteuerung, bei der aufgrund von vorgegebenen Soll-Werten für die Zylinderfüllung rlsoll und den Saugrohrdruck, der in Form eines Saugrohrdruckfaktors fpst vorgegeben ist, die Soll-Werte für den Drosselklappenwinkel wdks und den Ventilhub hvvts des Einlassventils ermittelt werden.

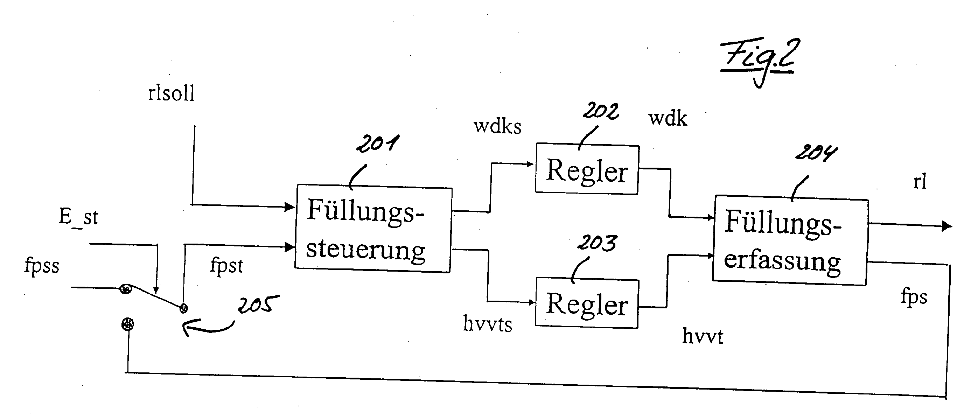

Der Füllungssteuerung 201 der Fig. 2, die in der Fig. 1 in Form eines schematischen Blockschaltbildes dargestellt ist, wird der Soll-Wert rlsoll für die Zylinderfüllung zugeführt. Dieser Soll-Wert gelangt zu dem Multiplikator 101 in dem dieser Soll-Wert mit dem Produkt aus einer Konstanten K und der Motordrehzahl n multipliziert wird. Das Ergebnis dieser Multiplikation wird dem Subtrahierer 102 zugeführt, in dem von diesem Wert der Tankentlüftungsmassenstrom mste abgezogen wird. Das Ergebnis dieser Subtraktion wird Dividierer 103 zugeführt.

Der Sollwert des Saugrohrdruckfaktors fpst, der einen Sollsaugdruck normiert auf 1130 hPa beinhaltet, wird dem Dividierer 105 zugeführt. Dort wird dieser Wert durch den normierten Druckfaktor für die Luft vor der Drosselklappe fpvdk geteilt. Das Ergebnis dieser Division wird der Kennlinie 106 zugeführt. In der Kennlinie 106 wird anhand dieses Wertes der Faktor fklaf ermittelt. Dieser Faktor repräsentiert die Strömungsgeschwindigkeit des Luftstromes über die Drosselklappe. Bei Druckverhältnissen an der Drosselklappe von Saugrohr zu Druck vor der Drosselklappe

$$ps / pvdk < 0,52$$

fließt die Luft mit Schallgeschwindigkeit über die Drosselklappe. Bei größeren Druckverhältnissen sinkt die Strömungsgeschwindigkeit der angesaugten Luft. Diesem Zusammenhang trägt die Kennlinie fklaf Rechnung, aus der der Faktor fklaf ermittelt wird. Der Faktor fklaf wird dann dem Multiplizierer 107 zugeführt, in dem dieser wieder mit dem Faktor fpvdk, dem normierten Druckwert, und das Ergebnis anschließend in dem Multiplizierer 108 mit dem Temperaturfaktor für die Luft vor der Drosselklappe ftvdk = $\sqrt{(273K / tvdk)}$ multipliziert wird. Dabei ist tvdk die Temperatur der angesaugten Luft vor der Drosselklappe. Das Ergebnis des Multiplizierers 108 wird als Divisor dem Dividierer 103 zugeführt.

Der sich aus der Division zwischen dem Dividenten und dem Divisor ergebende Wert des Dividierers 103 repräsentiert den Soll-Strom über die Drosselklappe. Aus diesem Sollstrom der Ansaugluft über die Drosselklappe wird dann der durch die Stelleinrichtung einzustellende Drosselklappenwinkel wdks in der Kennlinie 109 ermittelt.

Die Füllungssteuerung, also der Hub des Einlassventils, wird in ähnlicher Weise berechnet. Die Sollfüllung wird in einen Luftsollmassenstrom umgerechnet und durch die aktuellen Dichtefaktoren fpvdk und fpst dividiert. Mit dem Solldurchfluß bei Normdichte und der Drehzahl lässt sich dann der Sollhub des Einlassventils über ein Kennfeld ermitteln. Man erhält also den Sollhub hvvts. Hierzu wird der Saugrohrdruckfaktor fpst in dem Multiplizierer 110 zunächst mit dem Temperaturfaktor ftvdk für die Luft vor der Drosselklappe multipliziert und das Ergebnis dieser Multiplikation dem Dividierer 112 als Divisor zugeführt. Dem Multiplizierer 111 wird der Sollwert für die Zylinderfüllung rlsoll zugeführt und dort mit dem Produkt aus der Konstanten K und der Motordrehzahl n multipliziert. Das Ergebnis dieser Multiplikation wird dem Dividierer 112 als Dividend zugeführt. Das Ergebnis dieser Division wird dem Kennfeld 113 zugeführt. Aufgrund dieses Wertes und der Motordrehzahl n wird der Sollwert für den Ventilhub hvvts ermittelt.

Die Fig. 2 zeigt das Blockdiagramm des Verfahrens zum Betreiben einer Brennkraftmaschine gemäß der Erfindung. Gemäß diesem Verfahren wird der Füllungssteuerung 201, die beispielsweise gemäß dem Blockdiagramm der Fig. 1 erfolgt, der Sollwert rlsoll für die Zylinderfüllung und ein Saugrohrdruckfaktor fpst zugeführt. Aufgrund dieser beiden Werte ermittelt die Füllungssteuerung 201 die Sollwerte für den Drosselklappenwinkel wdks und den Ventilhub hvvts des wenigstens einen Einlassventils. Der Sollwert für den Drosselklappenwinkel wdks wird der Stelleinrichtung 202 für den Drosselklappenwinkel zugeführt. Der von der Stelleinrichtung 202 für den Drosselklappenwinkel erzeugte Drosselklappenwinkel wdk wird der Füllungserfassungseinrichtung 204 zugeführt.

Unabhängig von der Stelleinrichtung 202 für den Drosselklappenwinkel arbeitet die Stelleinrichtung 203 für die Ventilhubsteuerung. Die Stelleinrichtung 203 stellt aufgrund eines in der Füllungssteuerung 202 ermittelten Sollwertes für den Ventilhub hvvts einen Ventilhub ein. Der von der Stelleinrichtung 203 tatsächlich eingestellte Ventilhub hvvt wird ebenfalls der Füllungserfassung 204 zugeführt. Diese ermittelt aus diesen Werten dann die tatsächliche Zylinderfüllung rl und den Saugrohristdruck hinter der Drosselklappe fps.

Der Saugrohristdruck, der in der Füllungserfassung ermittelt oder aber durch einen entsprechenden Sensor gemessen wird, wird einer Umschalteinrichtung 205 zugeführt. Die Umschalteinrichtung 205 schaltet das Verfahren vom Normalbetrieb in den zweiten Betriebszustand, der aktiviert wird, wenn eine der beiden Stelleinrichtungen 202, 203 nicht mehr ordnungsgemäß funktioniert. In dem in der Fig. 2 dargestellten Zustand für den Normalbetrieb ist das Entscheidungsbit E_ST auf 0 gesetzt, der Normalbetriebszustand ist eingeschaltet. In diesem Normalbetriebszustand wird ein Sollwert für den Saugrohrdruck fpss als Saugrohrdruckfaktor fpst zugeführt.

Wenn eine Stelleinrichtung 202, 203 ausfällt oder zur Durchführung des Prüfungsverfahrens außer Betrieb genommen wird, dann kann die Sollfüllung und der Saugrohrsolldruck nicht mehr eingehalten werden. Sobald der Stellerfehler erkannt wird, wird das Bit E_ST auf 1 gesetzt und ein Umschalten der Umschalteinrichtung 205 erfolgt. Nunmehr wird anstelle des Saugrohrsolldruckes fpss der Faktor für den Saugrohristdruck fps als Saugrohrdruckfaktor fpst herangezogen. Damit übernimmt der intakte Steller die Steuerung der Füllung, es ist gewährleistet, dass weiterhin ein Sollwert rlsoll für die Zylinderfüllung in den Zylinder eingesteuert werden kann. Der Faktor für den Saugrohristdruck fps kommt beispielsweise von einem Saugrohrdrucksensor, er kann aber auch in der Füllungserfassung 204 aus dem Luftmassenstrom hfm ermittelt werden.

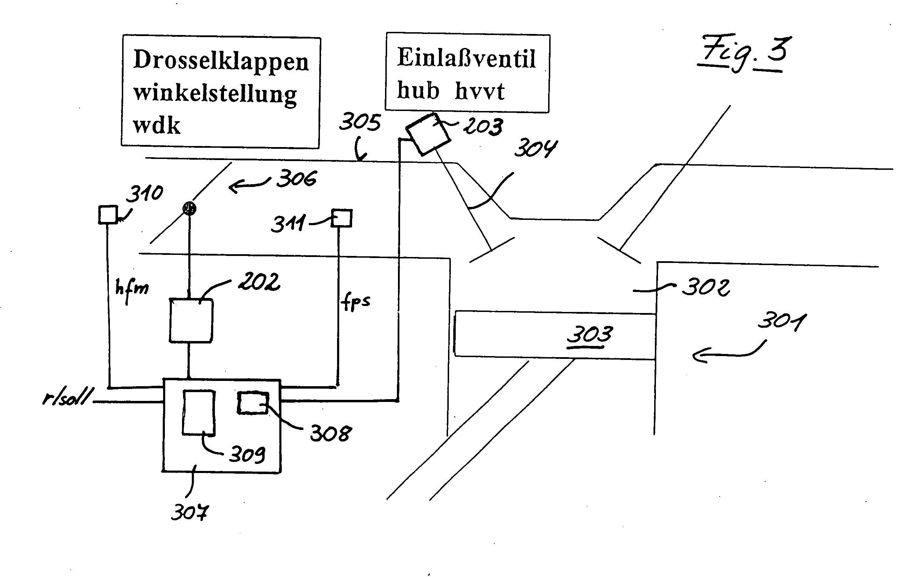

Die Fig. 3 zeigt in schematischer Darstellung eine Brennkraftmaschine 301. Die Brennkraftmaschine weist eine Brennkammer 302 auf, die in einem Zylinder angeordnet ist, in dem ein Hubkolben 303 beweglich gehalten ist. Die Zufuhr von Verbrennungsluft in den Brennraum erfolgt über das Einlassventil 304. Das Einlassventil 304 weist eine Steuereinrichtung 203 auf, mittels der der Ventilhub des Einlassventils 304 veränderbar ist, so dass die Füllung der Brennkammer mit Verbrennungsluft über das Einlassventil 304 veränderbar ist. Die angesaugte Luft gelangt über das Saugrohr 305 zu dem Einlassventil und der Brennkammer. In dem Saugrohr ist die Drosselklappe 306 angeordnet. Für die Drosselklappe ist eine Stelleinrichtung 202 vorgesehen, über die der Drosselklappenwinkel veränderbar ist. Der Drosselklappenwinkel bestimmt die durchströmbare Fläche des Saugrohres und stellt einen Strömungswiderstand her, so dass über die Drosselklappe eine Druckdifferenz zur im Saugrohr zuströmenden Luft erzeugbar ist. Die Stelleinrichtungen 202 und 203 arbeiten unabhängig voneinander. Die von Ihnen anzusteuernden Drosselklappenwinkel und Ventilhübe werden von einer Steuereinrichtung 307 ermittelt. Der Steuereinrichtung 307 werden Sollwertvorgaben, wie beispielsweise der Sollwert für die Zylinderfüllung rlsoll und Messwerte wie beispielsweise der von einem Luftmassensensor 310 oder der von einem Saugrohrdrucksensor 311 ermittelte Luftmassenstrom hfm bzw. Saugrohrdruck fps zugeführt.

In der Steuereinrichtung 307 ist ein Speicherelement 309 enthalten, das die für die auszuführenden Berechnungen erforderlichen Rechenregeln in Form eines auf dem Mikroprozessor 308 verarbeitbaren Programms enthält. Somit können in der Steuereinrichtung 307 alle erforderlichen Sollwertvorgaben, beispielsweise nachdem in Figuren 1 und 2 beschriebenen Verfahrensabläufen vorgenommen werden.

**Patentansprüche**

1. Verfahren zum Betreiben einer Brennkraftmaschine, insbesondere für ein Kraftfahrzeug, bei der Luft über eine in einem Ansaugrohr angeordnete Drosselklappe und über wenigstens ein Einlaßventil mit variabler Ventilhubsteuerung einem Brennraum zugeführt wird, wobei für Drosselklappe und Ventilhub jeweils eine Stelleinrichtung vorgesehen ist, wobei die beiden Stelleinrichtungen unabhängig voneinander und im Normalbetrieb derart angesteuert sind, daß ein vorgegebener Saugrohrdruck und eine vorgegebene Füllung des Brennraumes erzeugt werden, **dadurch gekennzeichnet, daß** bei Ausfall einer der Stelleinrichtungen (202 bzw. 203) lediglich ein Sollwert für die Zylinderfüllung (rlsoll) vorgegeben und mittels der noch funktionierenden Stelleinrichtung (202 bzw. 203) erzeugt wird.

2. Verfahren nach Anspruch 1, **dadurch gekennzeichnet, daß** der Stelleinrichtung (202) für die Drosselklappe (306) ein einzusteuernder Sollwert für den Drosselklappenwinkel (wdks) und der Stelleinrichtung (203) für den Ventilhub ein einzusteuernder Sollwert für den Ventilhub (hvvts) vorgegeben wird, wobei im Normalbetrieb die Sollwerte (wdks, hvvts) für die beiden Stelleinrichtungen (202 bzw. 203) aufgrund eines Sollwertes für den Luftmassenstrom (fpss) und eines Sollwertes für die Zylinderfüllung (rlsoll) ermittelt werden.

3. Verfahren nach Anspruch 1 oder 2, **dadurch gekennzeichnet, daß** bei Ausfall einer der beiden Stelleinrichtungen anstelle des Sollwertes für den Luftmassenstrom (fpss) der Istwert des Luftmassenstromes (fps) bei der Ermittlung der Sollwerte (wdks, hvvts) für die Stelleinrichtungen (202 bzw. 203) von Ventilhub und Drosselklappenwinkel herangezogen wird.

4. Verfahren nach einem der vorhergehenden Ansprüche, **dadurch gekennzeichnet, daß** der Stelleinrichtung (202) für die Drosselklappe ein einzusteuernder Sollwert für den Drosselklappenwinkel (wdks) und der Stelleinrichtung (203) für den Ventilhub ein einzusteuernder Sollwert (hvvts) für den Ventilhub vorgegeben wird, wobei im Normalbetrieb die Sollwerte (wdks, hvvts) für die beiden Stelleinrichtungen (202 bzw. 203) aufgrund eines Sollwertes für den Saugrohrdruck (fpss) und eines Sollwertes (rlsoll) für die Zylinderfüllung ermittelt werden.

5. Verfahren nach Anspruch 4, **dadurch gekennzeichnet, daß** bei Ausfall eines der beiden Stelleinrichtungen (202 bzw. 203) anstelle des Sollwertes für den Saugrohrdruck (fpss) der Istwert des Saugrohrdruckes (fps) bei der Ermittlung der Sollwerte (wdks, hvvts) für die Stelleinrichtungen (202 bzw. 203) von Ventilhub und Drosselklappenwinkel herangezogen wird.

6. Verfahren nach einem der Ansprüche 4 oder 5, **dadurch gekennzeichnet, daß** der Saugrohrdruck (fps) mittels eines im Saugrohr angeordneten Saugrohrdrucksensors (311) ermittelt wird.

7. Verfahren nach einem der vorhergehenden Ansprüche, **dadurch gekennzeichnet, daß** das Signal eines vor der Drosselklappe (306) angeordneten Luftmassensensors (hfm) für die Ermittlung des Luftmassenstromes herangezogen wird.

8. Prüfungsverfahren zur Überprüfung der Funktion eines Verfahrens gemäß der Ansprüche 1 bis 7, **dadurch gekennzeichnet, daß** ein zu erzeugendes Motormoment vorgegeben wird, wobei nach dem Erreichen dieses Motormomentes der Stellantrieb eines der beiden Stelleinrichtungen (202 bzw. 203) unterbrochen und überprüft wird, ob durch entsprechende Stellbewegung der noch funktionierenden Stelleinrichtung (202 bzw. 203) das vorgegebene Motormoment eingehalten wird.

9. Prüfungsverfahren nach Anspruch 8, **dadurch gekennzeichnet, daß** zunächst der Stellantrieb einer der beiden Stelleinrichtungen (202 bzw. 203) und nach der Überprüfung der Stellantrieb der anderen Stelleinrichtung (202 bzw. 203) unterbrochen und die Überprüfung durchgeführt wird.

10. Prüfungsverfahren nach einem der Ansprüche 8 oder 9, **dadurch gekennzeichnet, daß** überprüft wird, ob trotz einer künstlichen Störung des Signals wenigstens eines der beiden Sensoren Luftmassensensor und Saugrohrdrucksensor, das Einschwingverhalten des noch funktionierenden Stellers (202 bzw. 203) in die Position, in der das vorgegebene Motormoment eingehalten wird.

11. Steuerelement, insbesondere Read-Only-Memory, für ein Steuergerät einer Brennkraftmaschine, insbesondere eines Kraftfahrzeugs, auf dem ein Programm abgespeichert ist, das auf einem Rechengerät, insbesondere einem Mikroprozessor ablauffähig und zur Ausführung wenigstens eines Verfahrens nach einem der vorhergehenden Ansprüche geeignet ist.

12. Brennkraftmaschine, insbesondere für ein Kraftfahrzeug, mit einer in einem Saugrohr angeordneten Drosselklappe (306) und wenigstens einem Einlaßventil mit variabler Ventilhubsteuerung für jeden Brennraum, wobei für das wenigstens eine Einlaßventil und die Drosselklappe (306) unabhängige Stelleinrichtungen (202, 203) vorgesehen sind, wobei über Drosselklappe und Einlaßventil Luft dem Brennraum zuführbar ist, mit einem Steuergerät, das im Normalbetrieb Sollwerte für Ventilhub und Drosselklappenstellung aufgrund von Sollwerten für die Zylinderfüllung und dem Saugrohrdruck ermittelt, **dadurch gekennzeichnet, daß** bei Ausfall einer der beiden Stelleinrichtungen (202, 203) die Sollwerte für Ventilhub (hvvts) und Drosselklappenstellung (wdks) aufgrund eines Sollwertes der Zylinderfüllung (rlsoll) und einer der beiden Istwerte von Luftmassenstrom (hfm) oder Saugrohrdruck (fps) ermittelt werden.

_Fig 1_

wdks

109

103

_Fig 1_

mste

$-$ 102

fklaf

107 108

ftvdk

106

105

fpvdk

101

K * n

rlsoll

fpst

hvvts

113

112

111

K * n

110

ftvdk

n

7

EP 1 375 883 A2

*Fig.2*

Fig. 3

Einlaßventil
hub hvvt

Drosselklappen
winkelstellung
wdk